# EUROPEAN PATENT APPLICATION

(11) **EP 1 832 376 A2**
(43) Date of publication of application: **12.09.2007**
(21) Application number: 07103534.9
(22) Date of filing: 05.03.2007
(51) Int. Cl.: B23K 26/03, B23K 26/38

(54) **System and method for monotoring drilling process parameters and controlling drilling operation**

(30) Priority: 06.03.2006 US 367539
(71) Applicant: General Electric Company, Schenectady, NY 12345 (US)
(72) Inventor: Rockstroh, Todd Jay, Maineville, OH 45039 (US); Scheidt, Wilbur Douglas, Cincinnati, OH 45233 (US); Ash, Clarence A., Burlington, KY 41005 (US); Somers, Ralph Morgan, Cincinnnati, OH 45249 (US); Morabito, John Louis, West Chester, OH 45069 (US)
(74) Representative: Illingworth-Law, William Illingworth

(57) **Abstract**

A system (210, 510, 610) which broadly comprises: (a) a plurality of sensors (222, 226, 522, 526, 532, 654) for monitoring one or more relevant laser drilling process parameters other than only breakthrough (262, 372, 728) during operation of a laser drill (105); and (b) optionally a controller (246) that uses the one or more monitored laser drilling process control parameters to control a laser drill during operation (105) thereof. Also disclosed is a method which broadly comprises the following steps: (a) providing a plurality of sensors (222, 226, 522, 526, 532, 654) capable of monitoring one or more relevant laser drilling process parameters other than only breakthrough (262, 372, 728) during a laser drilling operation (105); (b) monitoring with the plurality of sensors (222, 226, 522, 526, 532, 654) one or more relevant laser drilling process parameters other than only breakthrough (262, 372, 728) during the laser drilling operation (105); and (c) optionally using the one or more monitored laser drilling process parameters to control (246) the laser drilling operation (105).

## Description

### BACKGROUND OF THE INVENTION

This invention broadly relates to a system and method for monitoring one or more laser drilling process parameters other than only breakthrough using a plurality of sensors. This invention further broadly relates to a system and method for using the one or more monitored process parameters to control a laser drilling operation.

In a gas turbine (e.g., jet) engine, air is drawn into the front of the engine, compressed by a shaft-mounted compressor, and mixed with fuel. The mixture is burned, and the hot exhaust gases are passed through a turbine mounted on the same shaft. The flow of combustion gas turns the turbine by impingement against an airfoil portion of the turbine blades and vanes, which turns the shaft and provides power to the compressor.

Turbine blades used in compressors, turbines, vanes, blisks, etc., comprise an airfoil. These turbine airfoils may have one or more internal cooling passages with openings or holes at the external surface(s) of the airfoil for the passage of cooling air out to remove heat from the interior of the airfoil and, in some cases, to provide a boundary layer of cooler air at the external surface of the airfoil. See, for example, commonly assigned U.S. Pat. No. 5,609,779 (Crow et al), issued March 11, 1997; and U.S. Pat. No. 6,339,208 (Rockstroh et al.), issued January 15, 2002. In addition, turbine shrouds often have cooling holes formed therein that may extend from the back surface of the base of the shroud and through to the forward or leading edge of the shroud, the bottom or inner surface of the base of the shroud in contact with the main (hot) gas stream, as well as the side panels or rails of the shroud, to provide both convection cooling inside the holes, as well as impingement and film cooling. See, for example, commonly assigned U.S. Pat. No. 5,169,287 (Proctor et al.), issued Dec. 8, 1992; and U.S. Pat. No. 6,354,795 (White et al.), issued March 12, 2002.

These cooling holes may be formed in turbine components such as airfoils, shrouds, etc., by aiming a laser at a selected point on the component for a predetermined period of time to bum a hole through the component. The laser may then be aimed at another selected point on the component for a predetermined period of time to bum another hole in the component. This process may be repeated to form all the cooling holes in the component. The period of time during which the laser is aimed at particular points may be determined by evaluating holes made previously in other components. See Background section of U.S. Pat. No. 6,339,208, supra.

Simple techniques have been used to detect laser drilling process parameters for controlling the laser drilling operation. One such simple technique is to use breakthrough detectors to determine when the drilled hole has been completed (by achieving breakthrough). During a laser drilling process, flashes of radiation occur from each laser pulse interacting with the component being drilled. Optical and/or acoustical sensors and techniques have used to detect these radiation flashes to determine when breakthrough occurs so that laser drilling may be halted. See, for example, commonly assigned U.S. Pat. No. 4,960,970 (Schneiter), issued October 2, 1990 (acoustical breakthrough detection); U.S. Pat. No. 5,026,964 (Somers et al.), issued June 25, 1991 (optical breakthrough detection); U.S Patent 5,045,669 (Ortiz, Jr. et al.), issued September 3, 1991 (optical and acoustical breakthrough detection). See also U.S. Pat. No. 5,247,155 (Steen et al.), issued September 21, 1993 (monitoring of plasma generated spaced charge distribution to control the laser focus positioning).

One area of difficulty in laser drilling is controlling the quality of the laser drilled hole. Controlling laser drilled hole quality may affect the effectiveness of the cooling provided, and thus potentially impact on the overall performance of the gas turbine engine, specific fuel consumption of the engine, engine emissions, component(s) life, etc. Control of laser drilling by using very simple techniques such as those used for detecting breakthrough may not be sufficient for effectively and efficiently monitoring laser drilled hole quality which tends to be a very complex parameter to measure. In addition, such simple techniques often result in false positives or negatives that may create significant time and labor issues to verify whether control of laser drilled hole quality has actually been achieved.

Accordingly, it would be desirable to provide a monitoring system and method that: (1) has the ability to effectively and efficiently monitor laser drilling process parameters, such as laser drilled hole quality, that involve more complex parameters to measure; (2) with a greater assurance of minimizing false positives or negatives as to whether the desired quality has been achieved with regard to the monitored laser drilling process parameter.

### BRIEF DESCRIPTION OF THE INVENTION

An embodiment of this invention is broadly directed at a system comprising: a plurality of sensors for monitoring one or more relevant laser drilling process parameters other than only breakthrough during operation of a laser drill.

Another embodiment of this invention is broadly directed at a system comprising:
a plurality of sensors for monitoring one or more laser drilling process parameters other than only breakthrough during operation of a laser drill; and
a controller that uses the one or more monitored laser drilling process control parameters to control a laser drill during operation thereof.

Another embodiment of this invention is broadly directed at a method comprising the following steps:
(a) providing a plurality of sensing techniques capable of monitoring one or more relevant laser drilling process parameters other than only breakthrough during a laser drilling operation; and
(b) monitoring with the plurality of sensing techniques one or more relevant laser drilling process parameters other than only breakthrough during the laser drilling operation.

Another embodiment of this invention is broadly directed at a method comprising the following steps:
(a) monitoring with a plurality of sensing techniques one or more relevant laser drilling process parameters other than only breakthrough during a laser drilling operation; and
(b) using the one or more monitored laser drilling process parameters to control the laser drilling operation.

### BRIEF DESCRIPTION OF THE DRAWINGS

Embodiments of the present invention will now be described, by way of example only, with reference to the accompanying drawings, in which:
FIG. 1 is perspective view of a turbine blade with portions broken away to show the internal structure of the turbine blade having laser drilled holes.
FIG. 2 is an enlarged sectional view of the turbine blade of FIG. 1 taken along line 2-2.
FIG. 3 represents a flow diagram illustrating representative steps in making the turbine blade shown in FIGS. 1 and 2, including the step of laser drilling holes in the turbine blade.
FIG. 4 is a schematic diagram of an embodiment of a system of this invention for carrying out the step of laser drilling holes in the turbine blade according to step 105 of the flowchart of FIG. 3 with associated sensing devices comprising a plurality of optical sensors.
FIG. 5 is a graphical illustration of a representative series of optical or drilling responses as sensed by sensing devices according to the embodiment shown in FIG. 4.
FIG. 6 is a similar graphical illustration to that of FIG. 5 but involving a series of less efficient pulses than those represented in FIG. 5.
FIG. 7 provides an illustrative comparison of laser drilled holes: (A) in focus; and (B)/(C) out of focus.
FIG. 8 is a schematic diagram of another embodiment of a system of this invention similar to that of FIG. 4, but further comprising an acoustical sensor.
FIG. 9 is a schematic diagram of another embodiment of a system of this invention similar to that of FIG. 8, but comprising a plurality of acoustical sensors.
FIG. 10 is a graphical illustration comparing potential acoustical pulse readouts, with corresponding optical pulse readouts like those illustrated in FIGS. 5-6.

### DETAILED DESCRIPTION OF THE INVENTION

As used herein, the term "workpiece " refers generally to an item, article, element, part, machine, equipment, structure, component, etc., that may be subjected to laser drilling in an embodiment of the system or method of this invention. Workpieces may include but are not limited to buildings and the various constituents parts thereof (e.g., girders, gutters, trusses, etc.), machine tools, various other mechanical and/or electrical devices or parts thereof (e.g., valves, etc.), vehicles of various types, for examples, automobiles and the various constituent parts thereof such as automobile engines, automobile frames, etc., ships and the various constituent parts thereof such as the hull, superstructure, etc., airplanes and the various constituent parts thereof such as the wings, fuselage, engines, etc. Workpieces that are often laser drilled in the embodiments of the system and method of this invention are gas turbine engine components (hereafter referred to as "turbine components"). Representative examples of turbine components that may be laser drilled include airfoils (e.g., turbine blades, turbine vanes, turbine blisks, etc.), turbine shrouds, turbine nozzles, combustors, augmentor hardware of gas turbine engines, exhaust nozzles, etc. These workpieces may comprise any reasonably solid material capable of transmitting laser drilling-induced vibrations when impulse excited, including metals, e.g., aluminum, chromium, zirconium, nickel, cobalt, iron, titanium, yttrium, magnesium, platinum group metals (e.g., platinum, palladium, rhodium, iridium, etc.), hafnium, silicon, tantalum, lanthanum, etc., or alloys of any of these metals, plastics, etc. These workpieces may be fixed or stationary, or may be in motion, e.g., moving, shifting, rotating, revolving, turning, pivoting, articulating, traveling, etc.

As used herein, the term "laser drill" refers to a device that uses a laser to remove material from a workpiece, for example, by repeatedly pulsing focused laser energy, to form, cut, trepan, create, generate, construct, craft, shape, fashion, produce, etc., a complete or partial (incomplete) aperture, opening, orifice, hole, cavity, bore, etc. Many laser drills comprise or may be associated with computer controlled multi-axis machine tools that may translate and/or rotate workpieces with respect to the laser drill, and may have, for example, 3 to 6 axes in various combinations of linear and rotational stages. Lasers suitable for drilling holes may include but are not limited to pulsed lasers, Q-switched lasers, continuous wave lasers, etc. For example, pulsed Nd:YAG, carbon dioxide, or excimer lasers, or any other type of laser capable of cutting (trepanning) or percussion drilling holes, may be used. Representative laser drills suitable for use herein are disclosed in, for example, commonly assigned U.S. Pat. No. 4,960,970 (Schneiter), issued October 2, 1990; U.S. Pat. No. 5,026,964 (Somers et al.), issued June 25, 1991; and U.S Pat. No. 5,045,669 (Ortiz, Jr. et al.), issued September 3, 1991, the relevant disclosures of which on laser drills and laser drilling are herein incorporated by reference.

As used herein, the term "laser drilling operation" refers to the use of a laser drill to perform one or more operations on a workpiece, including but not limited to forming, creating, cutting, drilling, producing, etc., a complete or partial (incomplete) aperture, opening orifice, hole, cavity, bore, etc., in a workpiece. For example, the laser drilling operation may form a hole by cutting or trepanning a semi-circular aperture in a workpiece, form a partial or incomplete hole by controlling the depth of the drilling operation, form a non-symmetric hole, or form a non-circular (e.g., oval shaped) but symmetric hole that may be partially formed or completely formed, e.g., into or through a component wall, etc.

As used herein, the term "sensor" refers to any sensing device that may be used to monitor one or more laser drill process parameters. Suitable sensors for use herein include but are not limited to photodetectors (e.g., photodiodes), radiation detectors, acoustical detectors (e.g., microphone), optical detectors, spectral detectors, etc. These sensors may detect one or more of the following: sound, visible, infrared and ultraviolet light, microwaves, x-rays, etc.

As used herein, the term "plurality of sensors" refers to the use of two or more sensors to monitor (e.g., detect, sense, identify, etc.), the same laser drilling process parameter or related laser drilling process parameters. A plurality of sensors may be used herein in embodiments of the system and method of this invention to provide the same or different information, data feedback, etc., to provide parallel or redundant monitoring of the same or related laser drilling process parameters for verifying the accuracy or correctness of the monitored parameter(s) for the purpose of minimizing or avoiding false positives or negatives, and for ensuring that the same or related laser drilling process parameters are accurately or correctly monitored, etc.

As used herein, the term "sensing technique" refers to any technique, method, process, etc., using one or more sensors for monitoring (e.g., detecting, sensing, identifying, etc.) one or more laser drilling process parameters. A plurality of sensing techniques may be used herein to provide parallel or redundant sensing of the same or related laser drilling process parameters for verifying the accuracy or correctness of the monitored parameter(s) for the purpose of minimizing or avoiding false positives or negatives, and for ensuring that the same or related laser drilling process parameters are accurately or correctly monitored). These sensing techniques may include automated visual inspections of the workpiece during or immediately after completion of the laser drilling operation, etc.

As used herein, the term "sensed characteristics" refers to any characteristic that may be detected by a sensor and/or sensing technique. Sensed characteristics may include, but are not limited to, one or more of the following: energy, light, radiation, sounds, etc.

As used herein, the term "data" refers to any information generated, obtained, collected, gathered, accumulated, provided, calculated, determined, supplied, furnished, produced, etc., by a sensor and/or sensing technique.

As used herein, the term "breakthrough" refers to when a laser drilling operation has completed a laser drilling operation, e.g., has completed the drilling of a hole.

As used herein, the term "laser drilling process parameter" refers to any laser drilling process parameter that may be monitored by a sensor or sensing technique detecting one or more sensed characteristics of a laser drilling operation. Relevant laser drilling process parameters include but are not limited to, one or more of the following: whether or not breakthrough has been achieved; whether the focus position of the laser is correct or appropriate; how efficiently the laser drilling operation is being carried out, e.g., how efficiently is a hole being drilled; the quality of a laser drilled hole; whether the laser drilling operation has reached non-metallic materials, such as filler materials (e.g., wax); whether changes may have occurred in the duration or amplitude of a laser pulse sensed, relative to prior sensed pulses, during the laser drilling operation (interaction time), thus indicating (e.g., indirectly) another change in the condition of the workpiece, the laser drilling operation, etc., may also have occurred; whether changes in laser drilling conditions may have occurred because particular materials are detected (for example, suggesting a need to change from laser drilling conditions for a metallic material to laser drilling conditions for a non-metallic material, and vice-versa); whether energy levels are drifting or otherwise changing during a laser drilling operation; whether the component to be subjected to the laser drilling operation is or has become partially damaged, thus requiring a change in the laser drilling operation, etc. All of these sensed parameters may be measured or monitored either directly to assess the drilling process parameter (e.g., quality thereof), or these drilling process parameters may be measured or monitored indirectly, for example, by comparison of measured parameters to prior specifications, templates (including electronic templates), etc., to assess differences in drilling characteristics and qualities from hole-to-hole, from workpiece-to-workpiece, etc.

As used herein, the term "a laser drilling process parameter other than solely breakthrough" refers to a laser drilling process parameter that may include (or many not include) breakthrough, but must include at least one other laser drilling process parameter, such as laser drilled hole quality, laser focus position, etc.

As used herein, the term "monitored laser drilling process parameter" refers to any laser drilling process parameter that is being monitored by an appropriate sensor(s) and/or sensing technique(s).

As used herein, the term "focus" refers to a point at which a beam of a laser converges, as well the relative position of the beam to the workpiece surface, and may be at, below or above the workpiece surface.

As used herein, the term "manufacturing operation" refers to an action, function, etc., carried out by a machine, tool, equipment, apparatus, instrument, appliance, engine, device, mechanism, etc., in a manufacturing system. Manufacturing operations that may be carried out by a machine, tool, equipment, apparatus, instrument, appliance, engine, device, mechanism, etc., include, but are not limited to one or more of machining (e.g., mechanical machining, electrochemical machining (ECM), electrical/electrode discharge machining (EDM), etc.), drilling (e.g., mechanical drilling, laser drilling, etc.), boring, milling (e.g., mechanical milling, chemical milling, etc.), grinding, reaming, cutting, finishing, fabricating, assembling, shaping, forging, casting, welding, coating (e.g., applying a protective coating, etc.), testing, evaluating, etc. Manufacturing operations may be carried out chemically, mechanically, electrically, or any combination thereof.

As used herein, the term "manufacturing step" refers to any procedure, process, practice, etc., carried out in a manufacturing method. Manufacturing steps include, but are not limited to one or more of machining (e.g., mechanical machining, electrochemical machining (ECM), electrical/electrode discharge machining (EDM), etc.), drilling (e.g., mechanical drilling, laser drilling, etc.), boring, milling (e.g., mechanical milling, chemical milling, etc.), grinding, reaming, cutting, finishing, fabricating, assembling, shaping, forging, casting, welding, coating (e.g., applying a protective coating), testing, evaluating, etc. Manufacturing steps may be carried out chemically, mechanically, electrically, or any combination thereof.

As used herein, the term "manufacturing system" refers to a system comprising one or more manufacturing operations.

As used herein, the term "manufacturing method" refers to a method of comprising one or more manufacturing steps.

As used herein, the term "manufacturing station" refers to a given point, place, position, etc., in the manufacturing system where one or more manufacturing operations are carried out.

As used herein, the terms "transmission," "transmitting", "transmit" and the like refer to any type, manner, etc. of providing, supplying, inputting or otherwise transmitting data. Transmission of data herein may be carried out electronically, including the use of wired electronic methods, wireless electronic methods or combinations thereof. Electronic transmissions may be carried out by a variety of local or remote electronic transmission methods, such as by using Local or Wide Area Network (LAN or WAN)-based, Internet-based, or web-based transmission methods, cable television or wireless telecommunications networks, or any other suitable local or remote transmission method.

As used herein, the term "computer" may refer to a personal computer (portable or desktop), server, mainframe computer, etc.

As used herein, the term "comprising" means various operations, steps, data, stations, components, parts, devices, techniques, parameters, etc., may be conjointly employed in this invention. Accordingly, the term "comprising" encompasses the more restrictive terms "consisting essentially of" and "consisting of."

An embodiment of the system of this invention broadly comprises: (a) a plurality of sensors for monitoring one or more relevant laser drilling process parameters other than only breakthrough during operation of a laser drill; and (b) optionally a controller that uses the one or more monitored laser drilling process control parameters to control the laser drill during operation thereof.

An embodiment of the method of this invention broadly comprises: (a) providing a plurality of sensing techniques capable of monitoring one or more relevant laser drilling process parameters other than only breakthrough during a laser drilling operation; (b) monitoring with the plurality of sensing techniques one or more relevant laser drilling process parameters other than only breakthrough during the laser drilling operation; and (c) optionally using the one or more monitored laser drilling process parameters to control the laser drilling operation.

The embodiments of the system and method of this invention are based on the discovery that sensed data obtained during laser drilling operations has previously been insufficiently or inadequately utilized in controlling the operation of laser drilling, and usually only to monitor relatively simple laser drilling process parameters such as breakthrough. In addition, the sensed data has been previously obtained primarily by limited a number of sensors or sensing techniques (often one sensor or sensing technique) that may lead to false positives or negatives that may make it difficult and time consuming to verify whether control of the laser drilling process has been achieved. These problems of insufficient/inadequate utilization of sensed data, as well as limitations in sensing the data obtained may make control of the laser drilling process extremely difficult or impractical where complex laser drilling process parameters are involved, such as, for example, the quality of the laser drilled hole(s); whether the focus position of the laser is correct or appropriate; how efficiently the laser drilling operation is being carried out; whether the laser drilling operation has reached metallic or non-metallic materials, such as filler materials (e.g., wax); whether changes may have occurred in the duration or amplitude of a sensed laser pulse, relative to prior sensed pulses, during laser drilling (interaction time), thus indicating (e.g., indirectly) another change in the condition of the workpiece, the laser drilling operation, etc., may also have occurred; whether changes in laser drilling conditions may have occurred because particular materials are detected (for example, suggesting a need to change from laser drilling conditions for a metallic material to laser drilling conditions for a non-metallic material, and vice-versa); whether energy levels are drifting or otherwise changing during a laser drilling operation; whether the component to be subjected to the laser drilling operation is or may have become partially damaged, thus requiring a change in the laser drilling operation, etc.

The embodiments of the system and method of this invention solve these problems by using a plurality of sensors or sensing techniques to monitor one or more relevant laser drilling process parameters during the laser drilling operation that may include breakthrough, but not only breakthrough, for example, a complex laser drilling process parameter such as the quality of the laser drilled hole, the position of the focus of the laser beam, etc. The sensed data obtained by this plurality of sensors or sensing techniques also improves the ability to more effectively control a laser drilling operation, especially one involving such complex laser drilling parameters. For example, embodiments of the system and method of this invention may be used to effectively monitor the quality of laser drilled hole, to improve the overall quality of the component being drilled, etc. The improved sensed data obtained may be incorporated as part of the control system for the laser drilling operation to change laser drilling parameters during, for example, each laser drilling of a hole, as well as to change laser drilling parameters before successive holes are drilled in the component, to average laser drilling process parameters, to make coarser parameter changes as the laser drills groups of holes, to change drilling process parameters between one completed component and a subsequent component during the drilling cycle, etc. These changes or alterations in laser drilling parameters may include but are not limited to changing or altering the laser pulse duration, changing or altering the sequence of pulses used to drill subsequent holes (e.g., using different combinations of short and/or long pulses within a sequence), changing or altering the spot size and/or focus location of the laser beam to change the diameter and/or other characteristics of the drilled hole (e.g., make it larger or smaller), etc.

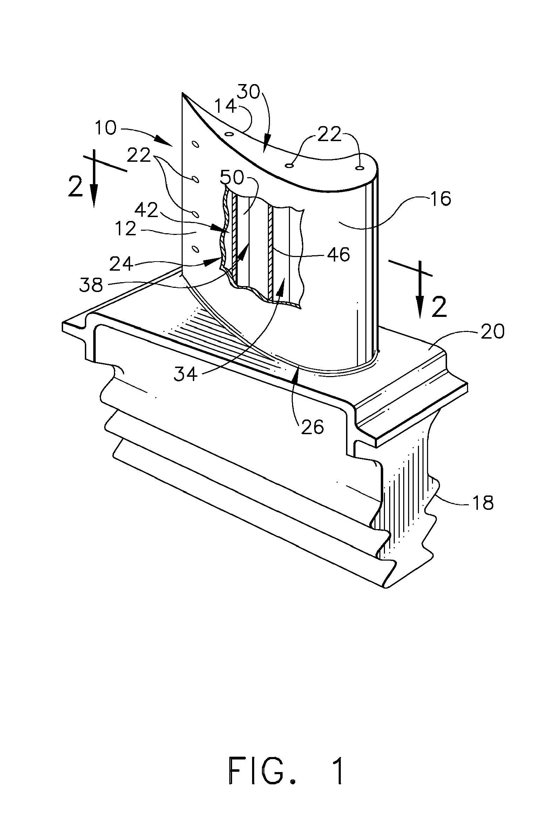

An illustration of a manufacturing system that may utilize embodiments of the system and method of this invention in manufacturing a turbine component is further illustrated by reference to the drawings as described hereafter. Referring to the drawings, FIG. 1 shows a gas turbine engine component comprising an airfoil in the form of a turbine blade identified generally as 10. (Turbine vanes have a similar appearance to turbine blades 10 with respect to the pertinent portions.) Blade 10 comprises an airfoil 12 against which hot combustion gases are directed during operation of the gas turbine engine, and whose surfaces may therefore be subjected to high temperature environments. Airfoil 12 has a "high-pressure side" indicated as 14 that is concavely shaped; and a suction side indicated as 16 that is convexly shaped and may sometimes known as the "low-pressure side" or "back side." In the operation of a gas turbine engine, the hot combustion gas is directed against the high-pressure side 14. Blade 10 may be anchored to a turbine disk (not shown) with a dovetail 18 that extends from platform 20 of blade 10 and may be received by slots along the periphery of the disk.

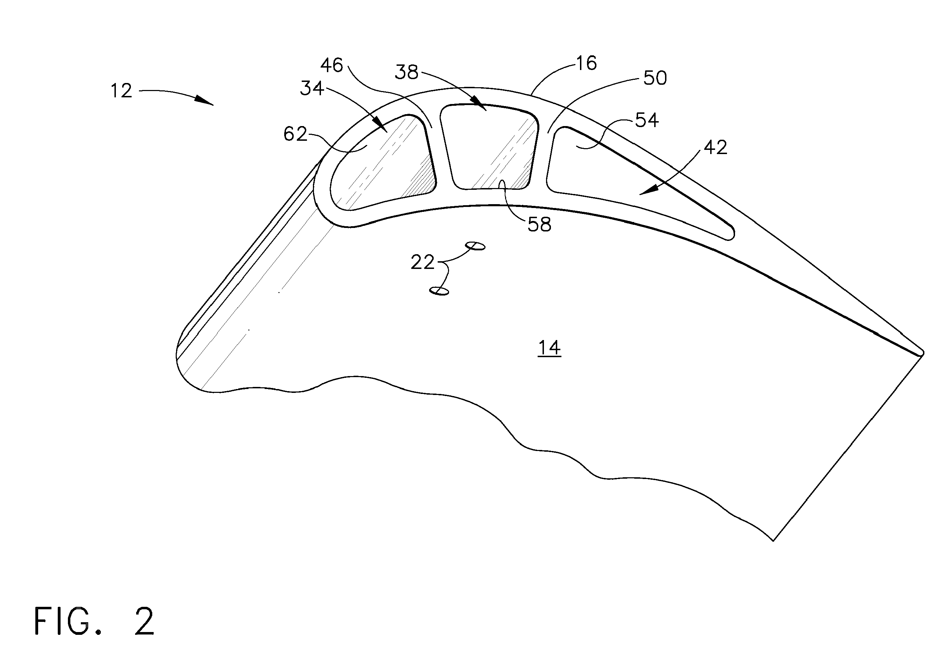

As shown in FIG. 1, there are a plurality of openings or holes indicated as 22 that are formed in convexly shaped low-pressure suction-side 16; a similar plurality of openings or holes 22 may also be formed in concavely-shaped high-pressure side 14. These openings or holes 22 may be formed in sides 16 and 14 to connect with one or more internal cooling passages extending through the interior indicated generally as 24 of the airfoil 12, from the root end indicated as 26 adjacent to dovetail 18, to the opposite distal tip end indicated as 30 remote from dovetail 18 that may also have openings or holes 22 that connect to the interior 24 of airfoil 12. While interior 24 of airfoil 12 may be provided with one such internal cooling passage (i.e., interior 24 of airfoil 12 is essentially hollow), FIG. 1 and especially FIG. 2 show interior 24 of airfoil 12 as having a plurality of such passages indicated as leading edge passage 34, central passage 38 and trailing edge passage 42 that are separated, respectively, by forward internal wall 46 and rearward internal wall 50, and that have internal surfaces indicated, respectively, as 54, 58 and 62. Airfoil 12 may also be provided with a protective coating (not shown) such as an aluminide diffusion coating that may be applied to the external surfaces of sides 14 and 16, as well as to internal surfaces 54, 58 and 62.

Blade 10 may be provided as a cast airfoil form (also referred to as a cast blade form or as a turbine blade blank) having internal cooling passages (e.g., passages 34, 38 and 42) formed in interior 24 of airfoil 12, but without the plurality of opening or holes 22 formed in sides 14 and 16, and with a blank root portion extending from platform 20, but without dovetail shape 18 formed therein. The cast airfoil form of blade 10 is also often provided without the protective coating on the external surfaces of sides 14 or 16, as well as internal surfaces 54, 58 and 62.

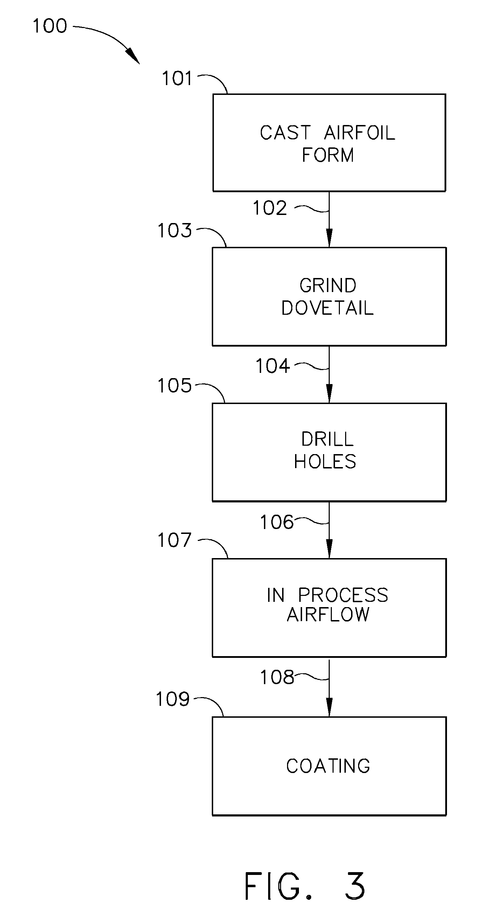

An illustrative manufacturing system for making blade 10 of FIGS. 1 and 2 is illustrated by the flowchart shown in FIG. 3 where the blade manufacturing system is indicated generally as 100. As shown in FIG. 3, the rectangles (101, 103, 105, 107 and 109) represent the various sequential manufacturing operations/steps of manufacturing system 100 for manufacturing blade 10. Each of the manufacturing operations/steps of manufacturing system 100 may be carried out sequentially at the same manufacturing station (e.g., blade 10 does not move from manufacturing station to manufacturing station but may be sequentially subjected to more than one manufacturing operation/step at the same manufacturing station), may be carried out sequentially at different manufacturing stations (e.g., blade 10 may be moved sequentially from manufacturing station to manufacturing station as it is processed), or a combination thereof (e.g., more than one manufacturing operation/step is carried out at one or more of the manufacturing stations, while a single manufacturing operation/step is carried out at one or more of the other manufacturing stations). It should also be understood that the manufacturing operations/steps shown for manufacturing system 100 of FIG. 3 are simply illustrative, and that the order/sequence of the manufacturing operations/steps may be deleted, changed, altered, modified, etc., as needed, and that additional manufacturing operations/steps (e.g., welding of tip end 30, further shaping of airfoil 12, etc.) may also be included in manufacturing system 100.

As shown in FIG. 3, the initial step in manufacturing system 100, indicated as 101, provides the cast airfoil form (hereafter referred to as "cast form"). As shown in FIG. 3, the cast form from step 101 may be sequentially moved, transferred, advanced or otherwise subjected in manufacturing system 100, as indicated by arrow 102, to a first manufacturing operation/step indicated generally as 103 to, for example, form dovetail shape 18 in the cast form (hereafter referred to as "ground component"). Operation/step 103 may be carried out, for example, by grinding the blank root portion of the cast form extending from airfoil 12.

After forming dovetail 18 in grinding operation/step 103, the ground component may then be sequentially moved, transferred, advanced or otherwise subjected, as indicated by arrow 104, to a second manufacturing operation/step indicated generally as 105. Operation/step 105 comprises a laser drilling operation/step. This laser drilling operation/step 110 may form a plurality of openings or holes 22 through sides 14 and 16 (as well as tip end 30) so as to connect to internal passages 34, 38 and 42. See, e.g., commonly assigned U.S. Pat. No. 5,609,779 (Crow et al), issued March 11, 1997 and U.S. Pat. No. 6,339,208 (Rockstroh et al), issued January 15, 2002 (the relevant disclosures of which are herein incorporated by reference) for illustrative methods and techniques for carrying out laser drilling step/operation 105 using laser drilling to form openings or holes 22 in a turbine blade 10 comprising an airfoil 12 having one or more internal cooling passages such as 34, 38 and 42.

After drilling openings or holes 22 in the ground component during laser drilling operation/step 105, the resulting drilled component, as indicated by arrow 106, may be sequentially moved, transferred, advanced or otherwise subjected to a third manufacturing operation/step indicated generally 107. In this embodiment of manufacturing system 100, operation/step 107 may involve evaluating the in process air flow of the drilled component.

As shown in FIG. 3, after the in process airflow evaluation operation/step 107, the drilled component may be sequentially moved, transferred, advanced or otherwise subjected, as indicated by arrow 108, to a fourth manufacturing operation/step indicated generally as 109. In this embodiment of manufacturing system 100, operation/step 109 may involve applying a coating, for example, a protective aluminide diffusion coating, to the external surfaces of sides 14 and 16, as well as to the internal surfaces 54, 58 and 62. See, e.g., commonly assigned U.S. Pat. No. 6,332,926 (Pfaendtner et al), issued December 25, 2001 and U.S. Pat. No. 6,616,969 (Pfaendtner et al), issued September 9, 2003 (the relevant disclosures of which are herein incorporated by reference) for illustrative methods and techniques for carrying out coating step/operation 109 on both external (e.g., 14 and 16) and internal (e.g., 54, 58 and62) surfaces of a turbine blade 10.

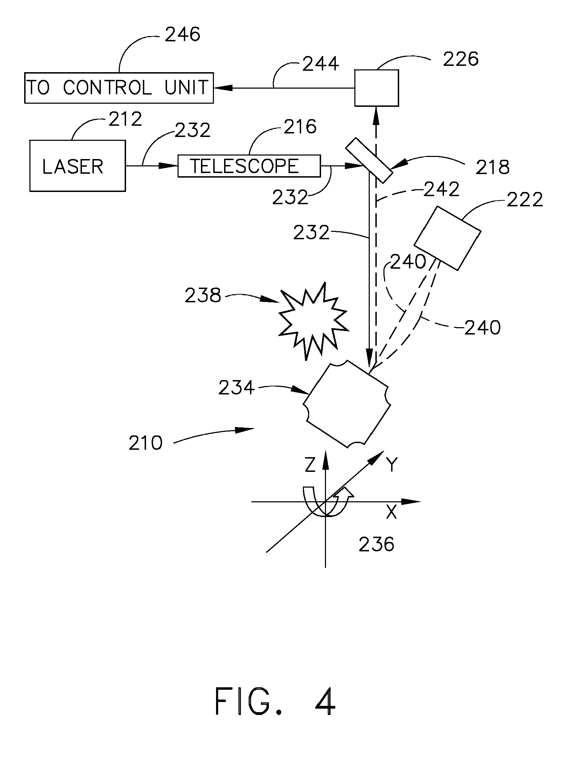

An embodiment of a laser drilling operation/step 105 according to manufacturing system 100 of FIG. 3, as well as the associated sensors, etc., for monitoring the laser drilling process parameters and for using these monitored process parameters in an embodiment of the system and method of this invention, is illustrated in FIG. 4. Referring to FIG. 4, laser drilling operation/step 105 is represented generally by a laser drilling system, indicated generally as 210, that includes a laser 212, a telescope 216, and a mirror 218. System 210 further includes a plurality of optical sensors, indicated as 222 and 226. In system 210, laser 212 directs a laser pulse 232 through telescope 216, where pulse 232 is then reflected by mirror 218 onto part 234. The positioning of part 234 may be controlled by a multi-axis computer numerical control (CNC) machine tool 236 and may be automatically positioned prior activation of laser 212. In this embodiment, sensors 222 and 226 may be used to measure the visible spectrum light emitted in radiation flash 238. Sensors 222 and 226 may be any type of radiation sensing device, for example, a simple photodiode, a line filtered or otherwise filtered photodiode, a high gain device such as a photomultiplier tube, filtered, unfiltered or spectrally separated light, etc. As shown in FIG. 4, optical sensor 222 may be positioned to the side of laser pulse 232 to indirectly monitor and gather data from laser pulse 232, as indicated by dashed lines 240. As shown in FIG. 4, optical sensor 226 may be positioned above mirror 218, to directly monitor and gather data, as indicated by dashed arrow 242, from laser pulse 232 that creates radiation flash 238.

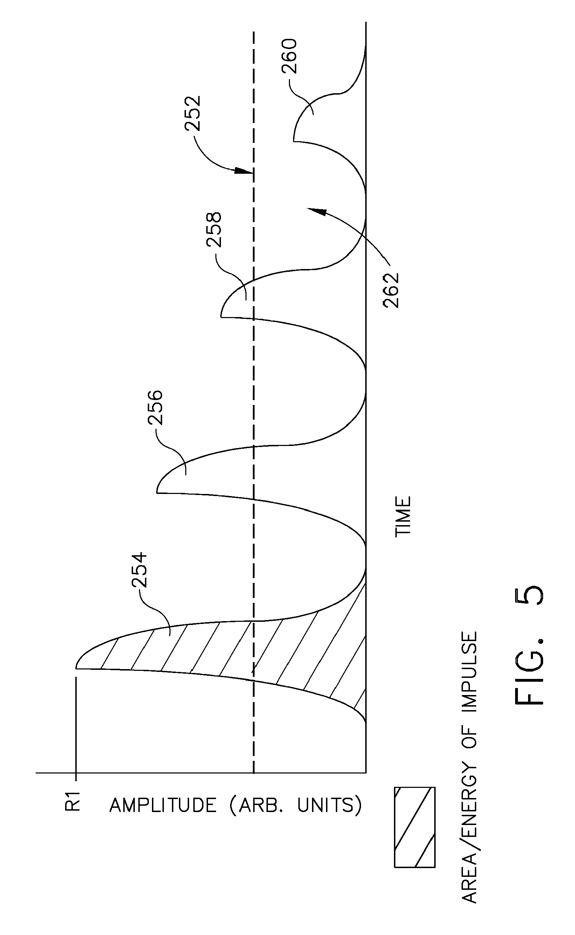

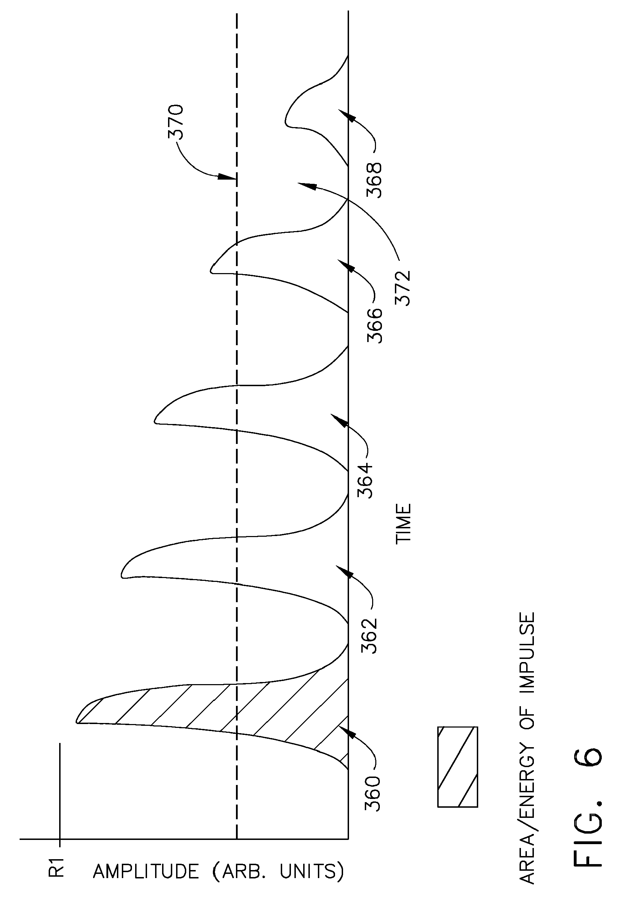

The collected visual data, as indicated by arrow 244, gathered by sensors 222 and 226 may be received by a control unit 246 and may then be converted into a graph, such as the one illustrated in FIGS. 5 and 6. The graph represented in FIG. 5 shows the optical (e.g., photodiode) response over several laser pulses 232 that may be required to drill a complete hole into and through part 234, with the breakthrough threshold being indicated by broken horizontal line 252. As can be seen, initial pulse 254 carries the most energy, with second pulse 256 and third pulse 258 having decreasing energy, and with breakthrough, indicated by 262, occurring prior to fourth pulse 260. As seen in the graph of FIG. 5, the fourth pulse 260 is below breakthrough threshold 252.

By contrast, in FIG. 6, a series of less efficient pulses 360, 362, 364, 366 and 368 are illustrated (the breakthrough threshold being indicated by broken horizontal line 370), with breakthrough, indicated by 372, occurring just prior to the fifth pulse 368. Although the first or initial pulse 360 carries the most energy, the decrease in energy in second pulse 362 and third pulse 364 does not decrease in the same ratio as second pulse 256 and third pulse 258 of FIG. 5. As may be seen by comparing the graphs in FIGS 6 and 5, the fourth pulse 366 of FIG. 6 has approximately the same energy as the third pulse 258 of FIG. 5 with breakthrough 372 (FIG. 6) and 262 (FIG. 5) occurring prior to the subsequent pulse fifth pulse 368, and fourth pulse 260, respectively.

Previously, system 210 of FIG. 4 and the sensor responses shown in FIGS. 5 and 6 were primarily used to measure when the response dropped below the threshold level 252 (FIG. 5) and 370 (FIG. 6) so as to indicate a relatively simple laser drilling process parameter such as breakthrough 262 (FIG. 5) and breakthrough 372 (FIG. 6). In previous systems 210, once a breakthrough response 262 (or 372) is received, control unit 246 would inhibit further laser 212 firing, for example, by either by shuttering the laser beam of laser 212, or electronically disabling laser 212 from flashing.

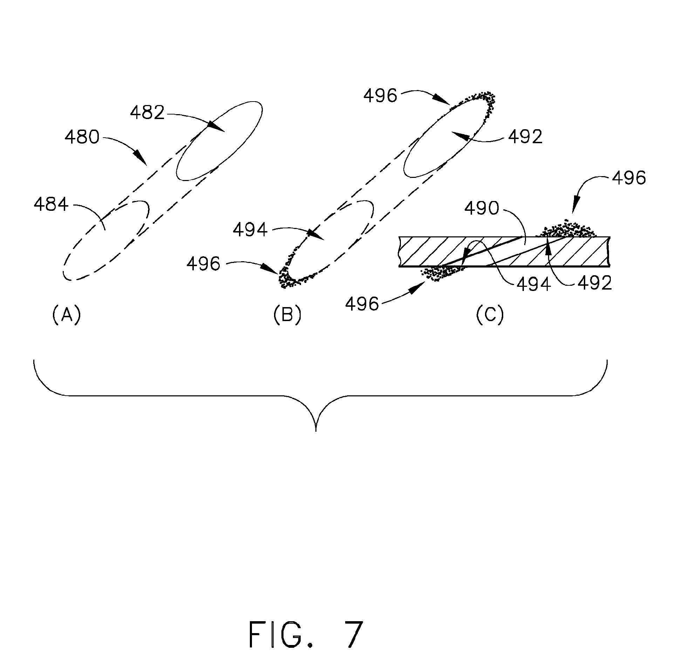

However, it has now been found that the responses shown in FIGS. 5 and 6 provide more information for controlling the laser drilling process than simply determining breakthrough, for example, the quality of the laser drilled hole, as illustrated by FIG. 7. FIG. 7 shows the difference in hole quality between a properly set (in) focus and an improperly set (out of) focus of the laser beam during laser drilling. As shown by A of FIG. 6, the focus of the laser beam that drilled hole 480 is properly set onto the part 234, resulting in a relatively clean hole with little or no debris attached around hole entrance 482 or exit 484 and producing a graph similar to that of FIG. 5. By contrast, as shown by B and C of FIG. 6, an improperly set focus of laser beam 232 onto part 234 results in hole 490 showing around both the entrance 492 and exit 494 a substantial amount of debris, indicated by 496.

Referring again to FIG. 5, the amplitude and energy within the initial pulse 254 are directly proportional to the focus location. A properly set focus position may result in some nominal amplitude and total energy in the initial pulse 254 response. A focus set or positioned too far into part 234 may result in initial pulse 254 containing most of the energy, but second pulse 256, third pulse 258 and fourth pulse 260 may have increased energy, and above the optimal settings of FIG. 5, due to more material being removed during drilling. By contrast, a focus set or positioned too far out from part 234 may result in the signals decreasing due to less material being removed.

When an improper focus is recognized by control unit 246, based upon the amplitude and energy of the first pulse, the focus may be properly repositioned for subsequent holes. The focus may be adjusted several ways, including moving mirror 218 relative to the surface of part 234, moving part 234 or changing the settings of an optical system such as adjustable telescope 216 back upstream from the final focus lens. These changes may be done automatically, for example, by CNC machine 236, or manually, depending upon the configuration of system 210.

The efficiency of laser system 210 in drilling a given hole may also be determined by the peaks and areas of initial pulse 254 and second pulse 256 or the entire series of pulses. For example, if breakthrough nominally occurs at the fourth pulse 260 response (see FIG. 5), then when a fourth pulse 366 (see FIG. 6) exceeds the breakthrough threshold 370, requiring a fifth pulse to achieve breakthrough 372, the process may have become less efficient. Using the graph of FIG. 5, system 210 may be used to recognize and correct processing efficiency by adjusting the parameters of laser 212, such as energy, to achieve more optimal processing conditions in drilling the hole(s).

There may be several ways to restore optimal efficiency with, for example, the amount of energy reaching the workpiece (e.g., part 234) being one method for restoration. A hole that takes longer to drill to completion (breakthrough) may also be an indication of energy loss. This problem of energy loss may be resolved by control unit 246, for example, increasing the amount of power supplied to laser 212. This increase in power may be accomplished without changing the number of pulses or pulse duration as an increase in pulse duration may risk damage to part 234 outside desired or allowable ranges.

The gathered and stored information received may be used to determine the resulting hole quality characteristics such as recast, taper, hole diameter, etc. By monitoring the series of laser pulses used in drilling a given hole and correlating those pulses to the quality of the drilled hole, control unit 246 may provide predictive data for subsequent laser drilling operations. For example, numerical transfer functions based on amplitudes, areas, changes in amplitudes and areas, etc., may be established and correlated to the resulting hole quality characteristics desired.

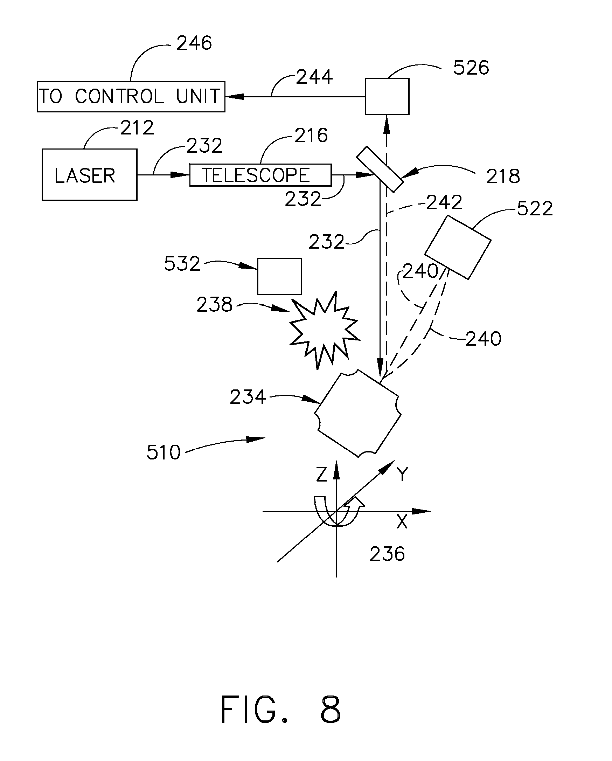

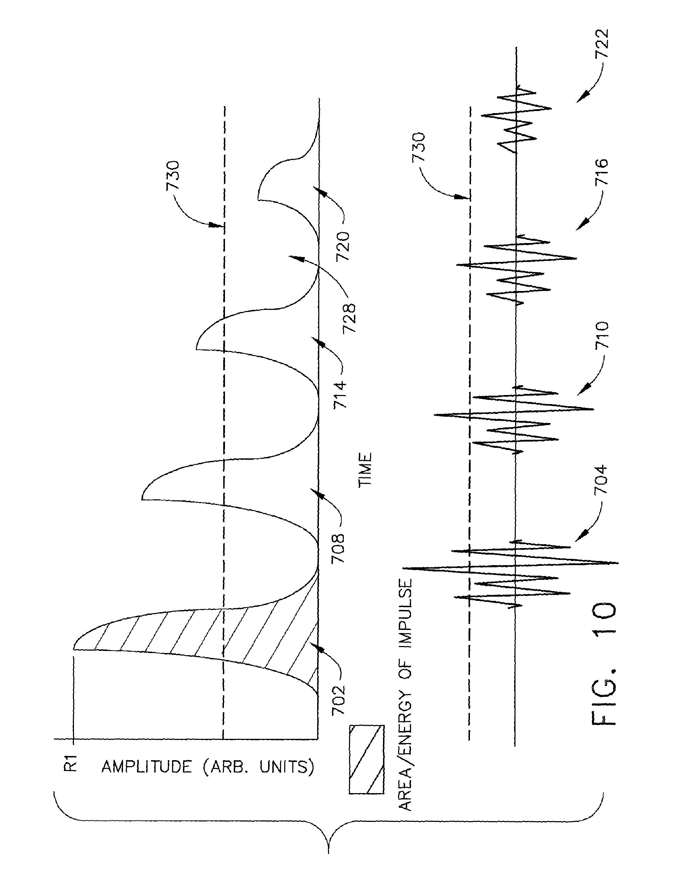

Another embodiment of the system of this invention is illustrated in FIG. 8 (where components the same as those of system 210 are identified with the same numbers). As shown in FIG. 8, system 510 may be provided with parallel optical sensors, indicated as 522 and 526. Besides parallel optical sensors 522 and 526, system 510 may incorporate different sensing capability to measure other characteristics of the laser drilling process to augment the data received and processed. For example, as illustrated in FIG. 8, a system 510 may include acoustical sensing capability in the form of an acoustical sensor 532 (e.g., microphone) to provide a monitoring redundancy in addition to that provided by optical sensors 522 and 526 in monitoring radiation flash 238. Acoustical sensor 532 may be placed, as shown in FIG. 8, at a distance from part 234 to pick up the acoustical responses to laser pulse 232 to provide, after some filtering to remove background noise, a graph similar to that obtained from the optical signals, and illustrated as acoustical readouts in FIG. 10, as described hereafter. Acoustical sensor 532, as well as any other sensors (e.g., optical sensors 522 and 526) included to monitor the drilling process, may also be placed a suitable distance from part 234 to protect microphone 532 from splatter and debris created by the laser drilling. The acoustical response from microphone 532 may serve as a redundant but independent measurement to optical sensors 522 and 526, thus minimizing or eliminating false positive or false negative responses/analyses. Although the two forms of sensors/sensing techniques (i.e., optical and acoustical) may overlap in their monitoring capability, each form of sensor or sensing technique may extend one end of the response range limits to enhance the usefulness of control system 246.

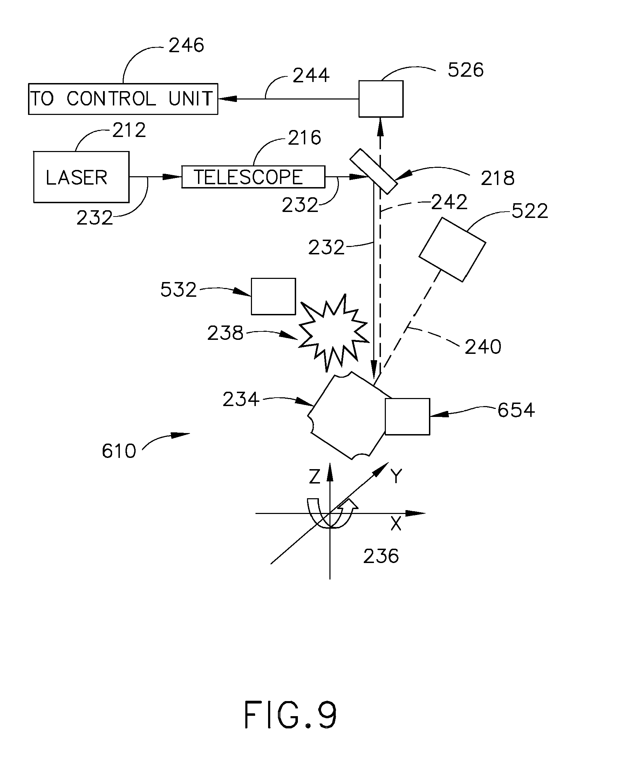

Another embodiment of the system of this invention is illustrated in FIG. 9 wherein system 610 (where components the same as those of system 210 of FIG. 4 and system 510 of FIG. 8 are identified with the same numbers). As shown in FIG. 9, system 610 may have the same laser 212, as well as the same optical sensors 522/526 and acoustical sensor 532 of the embodiments illustrated in FIGS. 4 and 8, but may also be provided with a second acoustical sensor, indicated as 654, attached to part 234. In addition to acoustical sensor 532 and optical sensors 522 and 526, second acoustical sensor 654, such as a second microphone, may directly measure the frequency spectrum response of part 234 during the drilling process. System 610 of FIG. 8 may be more sensitive to over drill detection and may provide confirmation that part 234 has been internally damaged and requires further inspection. The signature of part 234 as each hole is drilled may also change as a result of the additional sensing capability provided by system 610. The individual response and/or the accumulated responses of system 610 may also provide another indicator of the quality of part 234. The responses provided by system 610 may also be correlated to individual hole quality and overall airflow quality of part 234.

While systems 210, 510 and 610 illustrate various forms and combinations of optical sensors (e.g., photodiodes) and acoustical sensors (e.g., microphones) that may be used, other combinations of optical sensors and acoustical sensors may also be used, including single acoustical sensors with a plurality of (e.g., dual) optical sensors; a plurality of acoustical sensors with a plurality of optical sensors; a plurality of acoustical sensors with a single optical sensor, etc. These optical/acoustical sensors may also be combined with other forms of sensors, for example a vibrational sensor, etc., to provide other types of monitoring systems.

Using information gained from adjustment of laser 212, control unit 246 may, over several drilling operation cycles (e.g., several parts, shifts, days, etc.) determine whether laser 212 or other equipment maintenance is required prior to continuing with the drilling operation. Examples of maintenance issues that may be determined by control unit 246 may include adjustments of the cover slide, lens or mirrors that transmit and focus the laser beam from laser 212 onto part 234, etc. The information or data may be received by control unit 246 in parallel with the one or more of the sensors (e.g., acoustical sensors 532 and 654 and optical sensors 222/522 and 226/526), as well as the internal diagnostics common to most industrial laser systems (resonator optics, power supplies, water sources, etc.) may be used to resolve external efficiency loss versus internal efficiency loss. Control unit 246, however, may, up to a certain point, automatically increase or decrease the above parameters before any maintenance intervention is required.

Additional enhancement of the range, reliability and robustness of control unit 246 may be achieved through the use of a plurality (e.g., multiple) of optical sensors. The additional sensors may sense the same or different wavelengths (frequencies) between vacuum ultraviolet, visible, infrared, microwave and x-rays. Additional optical sensors (e.g., photodiodes) may be placed at two different angles with respect to the drilling location. When redundant or complimentary sensors such as acoustical sensors (e.g., 532 and 654) and optical sensors (e.g., 222/522 and 226/526) are largely responding to the same laser drilling process effect, the additional optical sensors may be used to override or compensate for a faulty measurement from a corresponding sensor (e.g., acoustical sensors 532 and 654 and/or optical sensors 222/522 and 226/526) due to electrical noise or other aberrations in a given response or series of responses. Optical fibers may also be used to deliver data back to an optical sensor (e.g., a photodetector(s)), thereby enabling, for example, the monitoring of the backside of a laser drilled airfoil shroud.

FIG. 10 illustrates potential acoustical pulse readouts that may be received from acoustical sensors 532 and 654 that are graphically presented below corresponding nominal optical pulse readouts received from optical sensors 222/522 and 226/526. As can be seen from FIG. 10, optical first pulse 702 and acoustical first pulse 704 both may contain the greatest level of energy which decreases with optical second pulse 708 and acoustical second pulse 710 decreasing and optical third pulse 714 and acoustical third pulse 716. As can also be seen in FIG. 10, breakthrough 728 occurs prior to the fourth optical pulse 720 and fourth acoustical pulse 722, neither of which approach the breakthrough threshold, indicated by broken horizontal line 730.

The responses from the acoustical and/or optical sensors may be used to detect metal to wax (e.g., filler materials for over drill protection) transitions, and vice versa, as, for example, changes in the emission signature and/or signal of the sound, light, x-rays, etc., sensed or detected. To enhance detection by the sensors, the wax or filler material may be doped with a material having a distinctive spectral emission that may be detected with a narrow spectral filter, etc.

For non-waxed parts, the temporal response may also be monitored and may produce a similar graph to that illustrated in FIG. 5. In monitoring the temporal response, the x-axis duration of each pulse versus the y-axis amplitudes shown in Fig 5 may be used. The initial metal spectral information received by control unit 246 may be identical to that of a waxed part, but because less material may be vaporized/melted the interaction time may be shorter. The interaction time change during the drilling of holes may also be monitored to provide similar advantages to the monitoring of power responses.

Systems 210/510/610, using spectrally based information or data, may provide further benefits in the control of thermal barrier coating (TBC) drilling. For example, a parameter favorable to drilling TBC/ceramics/non-metallics may be entered into control unit 246. When metal is impinged, systems 210/510/610 may detect a different line response from the returned data. Depending upon the overall make up of system 210/510/610, laser 212 may then be switched to metal drilling parameters, may just drill all of the coating starter cavities and then come back and drill the already started holes into the metal, etc.

Systems 210/510/610 may further provide the ability to warn the operator if the energy levels drift or change in during the drilling process. For example, the energy levels may be set at control unit 246 at a predetermined nominal level. During the drilling process, control unit 246 may detect variations from this predetermined level and, if applicable, may make any adjustments to laser 212 automatically. For example, if one of the lamps is not flashing, there may be a dramatic loss of energy, leading to a lower reference value in the breakthrough detection data. In the event systems 210/510/610 is not automated to the extent that system 210/510/610 may make these adjustments, the operator may also be informed and the adjustments may be made manually.

A tertiary monitoring system 210/510/610 may also pressurize blades 10 with air or another gaseous fluid to improve the expulsion of debris, particularly when drilling without wax. This may enable the use of real time airflow during drilling to monitor progress, in addition to the previously mentioned sensors. In systems 210/510/610 where the sensors and/or sensing techniques may detect small incremental changes, a simple pressure drop may be detected, signaling, for example, a breakthrough.

While specific embodiments of the system and method of this invention have been described, it will be apparent to those skilled in the art that various modifications thereto can be made without departing from the spirit and scope of this invention as defined in the appended claims.

## Claims

1. A system (210, 510, 610) comprising: a plurality of sensors (222, 226, 522, 526, 532, 654) for monitoring one or more relevant laser drilling process parameters other than only breakthrough (262, 372, 728) during operation of a laser drill (105).

2. The system (210, 510, 610) of claim 1, wherein the plurality of sensors include at least one optical sensor (222, 226, 522, 526) and at least one acoustical sensor (532, 654).

3. The system (210, 510, 610) of any of claims 1 to 2, wherein the monitored one or more relevant laser drilling process parameters includes the quality of a laser drilled hole (105).

4. The system (210, 510, 610) of any of claims 1 to 2, wherein the monitored one or more relevant laser drilling process parameters includes the focus position of the laser during the drilling operation (105).

5. The system (210, 510, 610) of any of claims 1 to 2, wherein the monitored one or more relevant laser drilling process parameters includes how efficiently the laser drilling operation is being carried out (105).

6. The system (210, 510, 610) of any of claims 1 to 2, wherein the monitored laser drilling process parameter includes whether the laser drilling operation (105) has reached metallic or non-metallic materials.

7. The system (210, 510, 610) of any of claims 1 to 2, wherein the monitored laser drilling process parameter includes whether changes have occurred in the duration or amplitude of a sensed laser pulse (260, 368, 720), relative to prior sensed laser pulses (258, 366, 714) during the laser drilling operation (105).

8. The system (210, 510, 610) of any of claims 1 to 2, wherein the monitored one or more relevant laser drilling process parameters includes whether energy levels of the laser drill are changing during the laser drilling operation (105).

9. The system (210, 510, 610) of any of claims 1 to 8, wherein the monitored one or more relevant laser drilling process parameters includes breakthrough (262, 372, 728).

10. The system (210, 510, 610) of any of claims 1 to 9, which further comprises a controller (246) that uses the one or more monitored laser drilling process control parameters to control a laser drill during operation (105) thereof.
